# EUROPÄISCHE PATENTSCHRIFT

(11) **EP 4 332 403 B1**
(45) Veröffentlichungstag und Bekanntmachung des Hinweises auf die Patenterteilung: **22.10.2025**
(21) Anmeldenummer: 23191284.1
(22) Anmeldetag: 14.08.2023
(51) Int. Cl.: F16D 7/02

(54) **STELLKRAFTKUPPLUNG**
ACTUATING FORCE COUPLING
EMBRAYAGE À FORCE DE RÉGLAGE

(30) Priorität: 26.08.2022 DE 102022208879
(43) Veröffentlichungstag der Anmeldung: 06.03.2024
(73) Patentinhaber: Siemens Mobility GmbH, 80997 München (DE)
(72) Erfinder: Vogt, Jens, 12587 Berlin (DE)
(74) Vertreter: Siemens Patent Attorneys

(56) Entgegenhaltungen:
- DE-A1- 102018 129 389
- DE-U- 1 906 296
- GB-A- 780 057
- JP-U- S6 124 531
- US-A1- 2008 289 928

## Beschreibung

Die Erfindung betrifft eine Stellkraftkupplung insbesondere für einen elektromechanischen Weichenantrieb im Bahnverkehr. Ferner betrifft die Erfindung eine elektromechanische Stelleinrichtung für einen Weichenantrieb sowie einen Weichenantrieb für den Bahnverkehr.

Aus der Druckschrift DE 19 06 296 U ist eine tragbare Kraftantriebsvorrichtung bekannt, bei der eine Abtriebswelle einer als Reibungskupplung ausgebildeten Überlastkupplung innerhalb eines Gehäuses durch ein kombiniertes Axial- und Radiallager abgestützt ist.

Aus der Druckschrift JP S61 24531 U ein Drehmomentbegrenzer bekannt, bei dem zwei Reihen von Kugellagern dazu vorgesehen sind, einen Antriebsflansch drehbar auf Bunden anzubringen, welche in einem Stück mit einer Antriebswelle gedreht werden.

Aus der Druckschrift GB 780 057 A ist eine drehmomentbegrenzende Kupplung mit rollbaren Antriebskörpern bekannt, die parallel zur Achse der Kupplung gegen Federdruck verschiebbar sind und zur Bewegungsübertragung zwischen zwei Kupplungsgliedern dienen, wobei das erste der Kupplungsglieder als Innenring eines mit rollbaren Körpern versehenen Schräglagers ausgebildet ist, auf dem das zweite Kupplungsglied drehbar gelagert und axial abgestützt ist, und wobei die Antriebskörper eine formschlüssige Verbindung herstellen, indem sie in Vertiefungen in einem Teil eines der Kupplungsglieder eingreifen.

Aus der Druckschrift US 2008/289928 A1 ist ein Kugelgewindetrieb mit einer Überlastkupplung bekannt, die bei Erreichen einer auf eine Kugelgewindespindel wirkenden Auslösekraft auslöst. Dabei sind bewegliche Druckelemente, an welchen eine Vorspannkraft angreift mit Axialkugellagern versehen.

Aus der Druckschrift DE 10 2018 129389 A1 ist eine Radlagereinheit mit einem Radlager bekannt. Das Radlager umfasst zwischen einem Innenring und einem Außenring angeordnete Wälzkörper zur Ausbildung eines Wälzlagers, wobei das Radlager dazu eingerichtet ist, Kräfte in axialer sowie radialer Richtung aufzunehmen.

Belastbare und zuverlässige Weichen sind ein entscheidender Faktor für eine Verbesserung einer Streckennutzung im Bahnverkehr. Insbesondere bei den wachsenden Anforderungen an die modernen Bahnen, z. B. im Fernverkehr, wo auch hohe Geschwindigkeiten auf einem abzweigenden Gleis der Weiche gefahren werden. Aber auch im Nah- und Güterverkehr entstehen hohe Belastungen, welche auf die Weichen wirken. Ein Weichenantrieb spielt daher eine wichtige Rolle für eine Sicherheit im Bahnverkehr. Er sollte präzise arbeiten, zuverlässig und hoch belastbar sein, sowie wirtschaftlich und vielseitig im Nah- und Fernverkehr für Weichen möglichst aller Bauarten und Spurweiten einsetzbar sein.

Ein elektromechanischer Weichen(stell)antrieb hat insbesondere folgende Aufgaben sicher und zuverlässig zu erledigen. Ein Umstellen einer Weiche, ein Festhalten der Weichenzungen der Weiche in deren Endlagen, ein mechanisches Sichern des Weichenverschlusses, ein elektrisches/elektronisches Melden eines Stellvorgangs und einer Endlage der Weichenzungen an ein Stellwerk, ein Öffnen der Auffahrkupplung im Weichenantrieb beim Auffahren der Weiche durch ein Fahrzeug und Abgeben einer Auffahrmeldung an eine Überwachungseinrichtung, etc.

Nicht nur während eines Stellbetriebs des Weichenantriebs selbst, sondern auch abseits davon werden beim Überfahren der Weiche, insbesondere bei einem Auffahren der Weiche, mit einem Fahrzeug hohe Kräfte in den Weichenantrieb eingeleitet, welche die Stellkraftkupplung schädigen und so langfristig zum Ausfall der Stellkraftkupplung und somit des Weichenantriebs führen können.

Es ist daher eine Aufgabe der Erfindung, eine verbesserte Stellkraftkupplung für einen Weichenantrieb sowie einen verbesserten Weichenantrieb anzugeben, der bzw. die insbesondere die auftretenden mechanischen Belastungen besser gewachsen ist.

Die Aufgabe der Erfindung ist mittels einer Stellkraftkupplung, insbesondere für einen elektromechanischen Weichenantrieb im Bahnverkehr, mittels einer elektromechanischen Stelleinrichtung für einen Weichenantrieb im Bahnverkehr, und mittels eines Weichenantriebs für den Bahnverkehr, gemäß den unabhängigen Ansprüchen gelöst. - Vorteilhafte Weiterbildungen, zusätzliche Merkmale und/oder Vorteile der Erfindung ergeben sich aus den abhängigen Ansprüchen und/oder der folgenden Beschreibung der Erfindung.

Untersuchungen von Weichenantrieben für den Bahnverkehr, welche eine bereits lange Einsatzdauer absolviert haben, haben gezeigt, dass ein derzeitiges Problem einer Lebensdauerbegrenzung der Weichenantriebe, trotz deren bereits hohen durchschnittlichen Lebensdauern, die während einer Lebensdauer eingeleiteten Kräfte in einen Weichenantrieb und dort insbesondere die in eine Stellkraftkupplung eingeleiteten Axialkräfte sind. Diese Axialkräfte schädigen insbesondere die dort eingesetzten dreiteiligen Axialrillenkugellager mit ihren zwei Axiallagerschalen und einem Kugelkäfig mit den Wälzkugeln.

Einem Funktionsprinzip einer Stellkraftkupplung folgend ergeben sich ferner während einer Stellkraftbegrenzung der Stellkraftkupplung kurze kraftfreie zeitliche Momente (rechter/linker Anschlag einer Überlastkupplung der Stellkraftkupplung). Dies führt bei den eingesetzten Axialrillenkugellagern zu einem Trennen eines mechanischen Kontaktverbands der Axiallagerschalen und des Kugelkäfigs.

D. h. bei einem Entlasten des Axialrillenkugellagers hebt sich dessen Kontaktverband für eine kurze Zeitspanne auf und bekommt ,Luft'. Der Kugelkäfig mit seinen Wälzkugeln fällt aus einer Rille einer Axiallagerschale heraus und erst bei einem Einsetzen einer Gegenlast fällt der Kugelkäfig schlagartig wieder in die betreffende Rille ein. Das Trennen und anschließende "Aufschlagen" des Kontaktverbands kann zu einer Beschädigung des Axialrillenkugellagers und damit zu einer weniger gut kontrollierbaren Funktion der Stellkraftkupplung führen.

Die erfindungsgemäße Stellkraftkupplung umfasst eine um eine Axialrichtung der Stellkraftkupplung herum rotierbar antreibbare Kupplungsnabe, in welcher eine Gewindespindel montierbar ist, wobei die Kupplungsnabe über eine Überlastkupplung mit einem rotierbaren Kupplungsgehäuse der Stellkraftkupplung mechanisch gekoppelt ist, und das Kupplungsgehäuse mittels zweier koaxialer Kombinationsrollenlager), aufweisend eine Kombination von zwei axial lagernden Rollengruppen und einer radial lagernden Rollengruppe, auf der Kupplungsnabe drehbar gelagert ist. D. h. natürlich auch umgekehrt, dass die Kupplungsnabe mittels der zwei koaxialen Kombinationsrollenlager innen im Kupplungsgehäuse drehbar gelagert ist.

In einem montierten Zustand der Kupplungsnabe auf der Gewindespindel bilden diese eine drehfeste Spindel-Nabe-Verbindung, d. h. eine Rotationsbewegung der Kupplungsnabe ist auf die Gewindespindel übertragbar. - D. h. ist die Stellkraftkupplung z. B. auf der Gewindespindel eines Weichenantriebs montiert, so kann die von der Stellkraftkupplung rotierbar antreibbare Gewindespindel mittels eines auf ihr eingerichteten Kugelgewindetriebs ihre Rotationsbewegung in eine lineare Stellbewegung des Kugelgewindetriebs abseits der Stellkraftkupplung wandeln. - Alternativ kann der Kugelgewindetrieb zwischen der Kupplungsnabe und der Gewindespindel eingerichtet sein.

Gemäß bekannter Lösungen ist also wie beschrieben eine Dreiteiligkeit der Axialrillenkugellager dergestalt ein Problem, dass die zwei Lagerschalen und der Kugelkäfig als eine Baugruppe einen losen Kontaktverband bilden, welcher nicht über einen Formschluss der drei Bauteile zusammengehalten ist. - Gemäß der Erfindung ergibt sich eine einteilige Lösung in Form eines Kombinationsrollenlagers als ein formschlüssiger Montageverbund einer Baugruppe aus mehreren Lagerschalen mit mehreren Rollengruppen, die vorzugsweise jeweils in Käfigen gehalten sein können. Als Rollen können vorzugsweise in der jeweiligen Rollengruppe Zylinderrollen oder Nadeln zum Einsatz kommen. Hierbei wird durch den konstruktiven Aufbau und/oder den Einbau des Kombinationsrollenlagers die Auflösung des Montageverbunds vermieden. Der konstruktive Aufbau von Kombinationsrollenlagern gewährleistet, dass der Montageverbund auch dann (nicht nur axial) erhalten bleibt, wenn keine axiale Kraftbelastung anliegt. D. h. ein Kombinationsrollenlager kann keine ,Luft' bekommen, da der Montageverbund auch in einem axiallastfreien Zustand gegeben ist.

Die Kombinationsrollenlager haben zum Beispiel als radialen Lagerteil im verstärkten Kombinationsrollenlager-Außenring (im Folgenden auch kurz Außenring genannt) einen Nadelkäfig oder einen vollnadeligen Nadelkranz als radial lagernde Rollengruppe. Die Stirnseiten des verstärkten Außenringes dienen als Laufbahnen für die axial lagernden Rollengruppen, z. B. zwei Axialnadellager oder Axial-Zylinderrollenlager. Der Kombinationsrollenlager-Innenring (im Folgenden auch kurz Innenring genannt)- zwischen den seitlichen Laufscheiben der Axiallager eingeschlossen - dient als Innenlaufbahn des radialen Lagerteils, gleichzeitig auch als Anschlag für die axial angrenzenden Kombinationsrollenlager-Laufscheiben (im Folgenden auch kurz Laufscheiben genannt), die das Lager axial nach außen begrenzen und nach innen die Laufbahnen für die beiden axial lagernden Rollengruppen bilden. Das Kombinationsrollenlager ist vorteilhaft steif und belastbar, hat eine hohe Laufgenauigkeit und kann ein Normalspiel aufweisen, spielarm oder mechanisch vorgespannt sein.

Das Kombinationsrollenlager überträgt aufgrund der beschriebenen Konfiguration Kräfte aus beiden Axialrichtungen, Kräfte aus einer beliebigen radialen Richtung, Kippmomentbelastungen sowie beliebige Lastkombinationen, die konstruktionsbedingt auf die eingesetzten Rollengruppen aufgeteilt werden. In Ausführungsformen ist das jeweilige Kombinationsrollenlager selbst als eine einteilig zusammengehaltene Baugruppe, als ein im Wesentlichen formschlüssiger Montageverbund, und/oder als ein spielarmes oder insbesondere ein mechanisch vorgespanntes Kombinationsrollenlager ausgebildet.

Die Stellkraftkupplung kann derart ausgebildet sein, dass in einem Stellbetrieb der Stellkraftkupplung die Überlastkupplung im Wesentlichen geschlossen bleibt. Im Stellbetrieb der Stellkraftkupplung rotiert die Kupplungsnabe die Gewindespindel und stellt dieser eine Stellkraft zur Verfügung. Die Stellkraft stammt aus dem rotierbaren Kupplungsgehäuse, welches über die geschlossene Überlastkupplung im Wesentlichen drehfest mit der Kupplungsnabe verbunden ist.

Ferner kann die Stellkraftkupplung derart ausgebildet sein, dass bei einem Begrenzen einer Stellkraft der Gewindespindel durch die Stellkraftkupplung, die Überlastkupplung gelöst ist. Beim Begrenzen der Stellkraft, z. B. weil die Gewindespindel nicht mehr weiterrotiert werden kann (z. B. Stelleinrichtung (vgl. unten) in Endlage (erster oder zweiter Anschlag), ggf. auch Endlage(n) der Weichenzungen oder Endlage des Herzstücks)), begrenzt die gelöste Überlastkupplung eine von der Kupplungsnabe auf die Gewindespindel aufgeprägte Stellkraft.

Des Weiteren kann die Stellkraftkupplung derart ausgebildet sein, dass beim Begrenzen der Stellkraft die axial gegeneinander vorgespannten Lamellen der Überlastkupplung aneinander vorbeigleiten. D. h. die Lamellen der Überlastkupplung sind beim Begrenzen der Stellkraft bevorzugt nicht ausrückbar, sondern behalten ihre gegenseitige Vorspannkraft. Beim Begrenzen der Stellkraft wird eine Umfangskraft zwischen den Lamellen größer als eine gegenseitige Haftkraft aufgrund ihrer mechanischen Vorspannkraft.

Die Kupplungsnabe kann radial innerhalb der Überlastkupplung eingerichtet sein, wobei sich die Kupplungsnabe über je ein betreffendes Kombinationsrollenlager in jeweils einem Druckstück der Überlastkupplung abstützt. Alternativ oder zusätzlich können die zwei Druckstücke auf ein Lamellenpaket der Überlastkupplung axial vorgespannt einwirken. D. h. die Überlastkupplung ist als eine Lamellen-Überlastkupplung ausgebildet.

Das Lamellenpaket der Überlastkupplung kann axial zwischen den Kombinationsrollenlagern eingerichtet sein. Bevorzugt trägt die Kupplungsnabe radial außen die wenigstens eine Innenlamelle, und hält das Kupplungsgehäuse radial innen die wenigstens eine Außenlamelle der Überlastkupplung. Und natürlich ist die jeweilige Innenlamelle und die jeweilige Außenlamelle drehfest auf der Kupplungsnabe bzw. im Kupplungsgehäuse vorgesehen und dort axial verschieblich gelagert.

Das Kombinationsrollenlager kann an lediglich zwei oder lediglich drei in Umfangsrichtung der Stellkraftkupplung umlaufenden Eckbereichen in der Stellkraftkupplung festgelegt sein. Dies betrifft natürlich bevorzugt beide Kombinationsrollenlager. In einem axial-radialen Halbschnitt der Stellkraftkupplung kann das Kombinationsrollenlager wenigstens an einander diagonal gegenüberliegenden Eckbereichen festgelegt sein. Dies betrifft natürlich wiederum bevorzugt beide Kombinationsrollenlager. Das Kombinationsrollenlager kann radial außen axial einseitig oder axial beidseitig, und radial innen axial beidseitig oder axial einseitig in der Stellkraftkupplung festgelegt sein.

Ein Kombinationsrollenlager-Außenring des Kombinationsrollenlagers kann innen in einem Druckstück der Überlastkupplung eingerichtet sein. Der Kombinationsrollenlager-Außenring kann axial beidseitig oder axial einseitig im Druckstück festgelegt sein. Dies kann z. B. mittels eines Absatzes innen am Druckstück und/oder eines Sicherungsrings innen im Druckstück erfolgen. Der Kombinationsrollenlager-Außenring kann sich radial teilflächig oder vollflächig innen im Druckstück abstützen.

Ein Kombinationsrollenlager-Innenring des Kombinationsrollenlagers kann außen auf der Kupplungsnabe eingerichtet sein. Der Kombinationsrollenlager-Innenring kann axial einseitig oder axial beidseitig auf der Kupplungsnabe festgelegt sein, wobei dies über die axial beidseitig an dem Innenring anliegenden Kombinationslagerlaufscheiben erfolgt, die sich zu diesem Zwecke axial auf der Kupplungsnabe abstützen. Dies kann z. B. mittels eines Absatzes außen an der Kupplungsnabe und/oder eines Sicherungsrings außen an der Kupplungsnabe erfolgen. Der Kombinationsrollenlager-Innenring kann sich radial teilflächig oder vollflächig abstützen.

Vorzugsweise kann vorgesehen werden, dass der Kombinationsrollenlager-Innenring zusammen mit den Kombinationsrollenlager-Laufscheiben mit einer Spannmutter axial einseitig oder axial beidseitig auf der Kupplungsnabe festgelegt ist. Mithilfe der Spannmutter oder der Spannmuttern kann das jeweilige Kombinationsrollenlager unter Vorspannung montiert und gehalten werden. Dies hat den Vorteil, dass die Wahrscheinlichkeit, dass das Lager "Luft" bekommt, weiter verringert werden kann. Der Vorteil der zum Einsatz kommenden Kombinationsrollenlager ist, dass diese eine hohe Tragkraft haben, und daher auch unter Vorspannung verschleißarm zum Einsatz kommen können.

Die Erfindung beruht mit anderen Worten auf Untersuchungsergebnissen, die gezeigt haben, dass, wenn die Vorspannung bei der Montage der Kombinationsrollenlager nicht zu groß gewählt wird, also unterhalb einer vorgegebenen maximalen Vorspannung bleibt, eine Erhöhung der Lebensdauer der Lager erreicht wird. Dies lässt sich damit erklären, dass eine Verringerung der Lebensdauer der Kombinationsrollenlager aufgrund eines vorspannungsbedingten Mehrverschleißes der Wälzkörper geringer ausfällt, als die Verringerung der Lebensdauer, die aufgrund von Beschädigungen bei Stößen auf das Lager auftreten können, wenn in diesem ein Abheben der Lagerringe und anschließend ein Aufschlagen derselben auf die Wälzkörper erfolgt.

Die maximale Vorspannung kann für einen vorgegebenen Anwendungsfall, beispielsweise für die Montage in einer Stellkraftkupplung, durch Versuche ermittelt werden. Allgemein gilt: je größer die Vorspannung, desto geringer die Lebenserwartung des Kombinationsrollenlagers mit Blick auf einen Verschleiß der Wälzkörper, aber auch desto höher die Lebenserwartung aufgrund ausbleibender Beschädigungen der Wälzkörper durch Stöße. Hier muss also ein Kompromiss mit dem Ziel einer Maximierung der Lebensdauer in einer Umgebung mit auftretenden Stoßbelastungen gefunden werden.

Die zwei Druckstücke können axial außen jeweils von einer Vorspanneinrichtung gegeneinander axial vorgespannt in der Stellkraftkupplung eingerichtet sein. Hierbei ist die betreffende Vorspanneinrichtung insbesondere eine Tellerfeder oder eine Tellerfederanordnung umfassend wenigstens zwei Tellerfedern. Eine mechanische Vorspannung der jeweiligen Vorspanneinrichtung kann von einem jeweils axial außen an der Vorspanneinrichtung eingerichteten Einstellglied einstellbar und aufrechterhalten sein. Mittels eines Einstellglieds ist eine mechanische Vorspannung wenigstens der betreffenden Vorspanneinrichtung einstellbar. Das jeweilige Einstellglied kann innen im Kupplungsgehäuse eingerichtet sein, wobei das Einstellglied bevorzugt mittels einer Einstellverschraubung in Axialrichtung verstellbar im Kupplungsgehäuse eingerichtet ist.

Die Erfindung ist im Folgenden anhand von Ausführungsbeispielen unter Bezugnahme auf die beigefügte schematische und nicht maßstabsgetreue Zeichnung näher erläutert. Abschnitte, Elemente, Bauteile, Einheiten, Komponenten und/oder Schemata, welche eine identische, univoke oder analoge Ausbildung und/ oder Funktion besitzen, sind in der Figurenbeschreibung (s. u.), der Bezugszeichenliste, den Patentansprüchen und in den Figuren (Fig.) der Zeichnung mit denselben Bezugszeichen gekennzeichnet. Eine mögliche, in der Erfindungsbeschreibung (s. o.) nicht erläuterte, in der Zeichnung nicht dargestellte und/oder nicht abschließende Alternative, eine statische und/ oder kinematische Umkehrung, eine Kombination etc. zu den Ausführungsbeispielen der Erfindung bzw. einer Komponente, einem Schema, einer Einheit, einem Bauteil, einem Element oder einem Abschnitt davon, kann ferner der Bezugszeichenliste und/oder der Figurenbeschreibung entnommen werden.

Bei der Erfindung kann ein Merkmal (Abschnitt, Element, Bauteil, Einheit, Komponente, Funktion, Größe etc.) positiv, d. h. vorhanden, oder negativ, d. h. abwesend, ausgestaltet sein. In dieser Spezifikation (Beschreibung (Erfindungsbeschreibung (s. o.), Figurenbeschreibung (s. u.)), Bezugszeichenliste, Patentansprüche, Zeichnung) ist ein negatives Merkmal als Merkmal nicht explizit erläutert, wenn nicht gemäß der Erfindung Wert daraufgelegt ist, dass es abwesend ist. D. h. die tatsächlich gemachte und nicht eine durch den Stand der Technik konstruierte Erfindung darin besteht, dieses Merkmal wegzulassen.

Ein Merkmal dieser Spezifikation kann nicht nur in einer angegebenen Art und/oder Weise, sondern auch in einer anderen Art und/oder Weise angewendet sein (Isolierung, Zusammenfassung, Ersetzung, Hinzufügung, Alleinstellung, Weglassung etc.). Insbesondere ist es möglich, anhand eines Bezugszeichens und einem diesem zugeordneten Merkmal bzw. vice versa, in der Beschreibung, der Bezugszeichenliste, den Patentansprüchen und/oder der Zeichnung, ein Merkmal in den Patentansprüchen und/oder der Beschreibung zu ersetzen, hinzuzufügen oder wegzulassen. Darüber hinaus kann dadurch ein Merkmal in einem Patentanspruch ausgelegt und/oder näher spezifiziert werden.

Die Merkmale der Beschreibung sind auch als optionale Merkmale interpretierbar; d. h. ein jedes Merkmal kann als ein fakultatives, arbiträres oder bevorzugtes, also als ein nicht verbindliches, Merkmal aufgefasst werden. So ist eine Herauslösung eines Merkmals, ggf. inkl. seiner Peripherie, aus einem Ausführungsbeispiel möglich, wobei dieses Merkmal dann auf einen verallgemeinerten Erfindungsgedanken übertragbar ist. Das Fehlen eines Merkmals (negatives Merkmal) in einem Ausführungsbeispiel zeigt, dass das Merkmal in Bezug auf die Erfindung optional ist. Ferner ist bei einem Artbegriff für ein Merkmal auch ein Gattungsbegriff für das Merkmal mitlesbar (ggf. weitere hierarchische Gliederung in Untergattung etc.), wodurch, z. B. unter Beachtung von Gleichwirkung und/oder Gleichwertigkeit, eine Verallgemeinerung des Merkmals möglich ist.

In den lediglich beispielhaften Figuren (Fig.) zeigen:
die Fig. 1 eine Draufsicht auf eine herkömmliche Bahnweiche, deren Weichenzungen zum Stellen ihrer Fahrwege von einem Stellschieber eines Weichenantriebs der Weiche betätigbar sind,
die Fig. 2 eine Draufsicht auf einen oben offenen Weichenantrieb, wobei das mechanische, elektrische und elektromechanische Innere des Weichenantriebs lediglich grob schematisch dargestellt ist, und
die Fig. 3 eine zentrale und axial-radiale Schnittansicht durch eine Stellkraftkupplung für einen Weichenantrieb im Bahnverkehr, z. B. den Weichenantrieb aus der Fig. 2.

Obwohl die Erfindung oben und im Folgenden detaillierter durch bevorzugte Ausführungsbeispiele näher beschrieben und illustriert ist, so ist die Erfindung nicht durch die offenbarten Ausführungsbeispiele eingeschränkt, sondern ist von grundlegenderer Natur. Andere Variationen können hieraus und/oder aus Obigem (Erfindungsbeschreibung) abgeleitet werden, ohne den Schutzumfang der Erfindung zu verlassen.

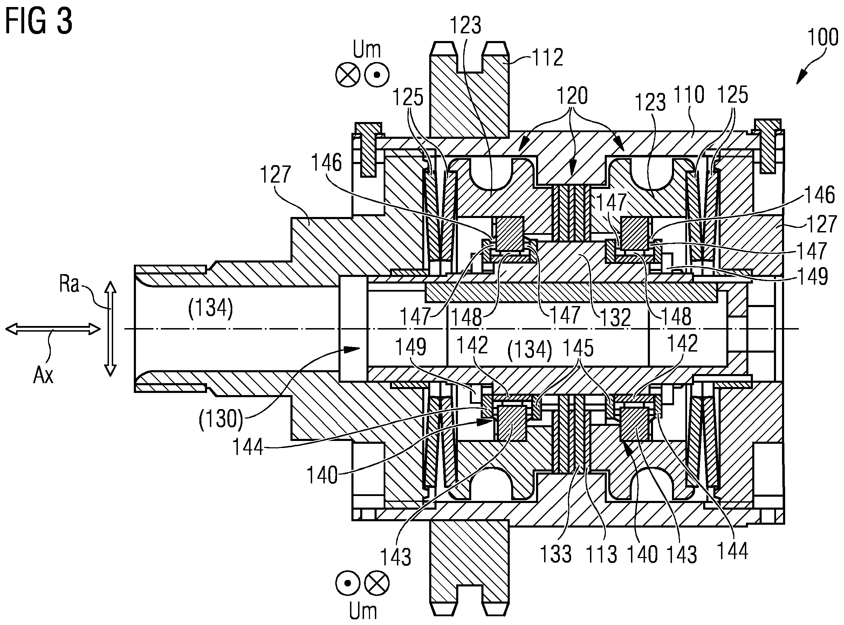

Die Erfindung ist im Folgenden anhand von Ausführungsbeispielen einer spezifischen Ausführungsform (Fig. 3) einer Variante einer Stellkraftkupplung 100 für einen Weichenantrieb 1 näher erläutert. In der Zeichnung sind nur diejenigen räumlichen Abschnitte eines Gegenstands der Erfindung dargestellt, welche für ein Verständnis der Erfindung notwendig sind. Die Erläuterung der Erfindung anhand der Zeichnung bezieht sich im Folgenden auf eine Axialrichtung Ax, eine Radialrichtung Ra und eine Umfangsrichtung Um der Stellkraftkupplung 100.

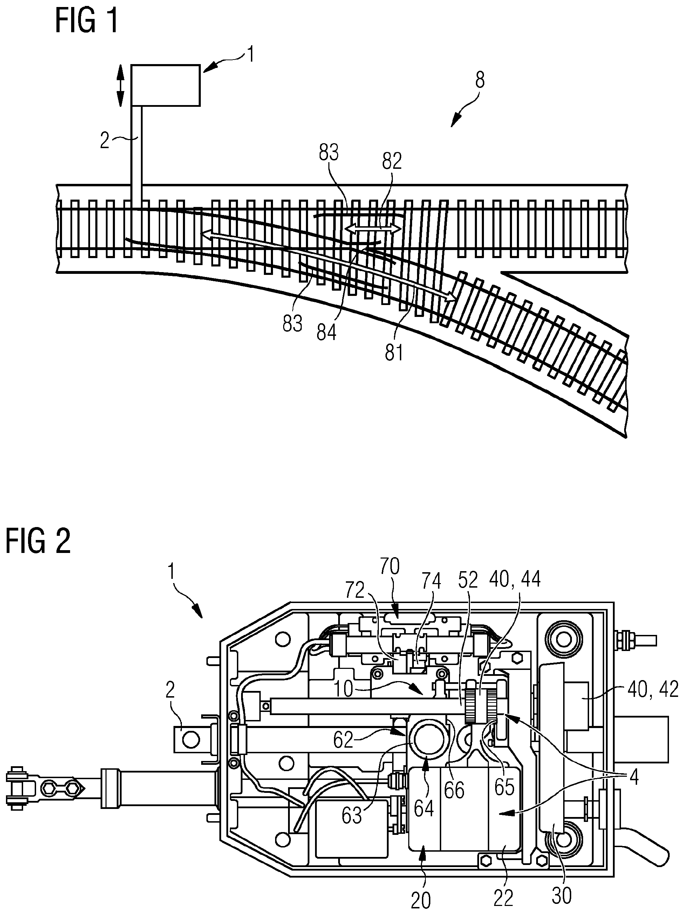

Die Fig. 1 zeigt eine Weiche 8, deren Schienen einen ersten Fahrweg 81 und einen zweiten Fahrweg 82 vorgeben. Der erste Fahrweg 81 ist derjenige, welcher bei einer entsprechenden Stellung der Weiche 8 von einem Gleis in Kurvenfahrt wegführt, während der zweite Fahrweg 82 geradeaus verläuft. Um die Weiche 8 zu stellen, ist ein Weichenantrieb 1 mit einem Stellschieber 2 vorgesehen, welcher in lateraler Richtung (Doppelpfeil am Weichenantrieb 1) hin- und herbewegbar ist und an einer inneren Weichenzunge und einer äußeren Weichenzunge der Weiche 8 befestigt ist. Auf diese Weise lassen sich die Weichenzungen betätigen, wodurch die Fahrwege 81, 82 für ein Bahnfahrzeug gestellt werden können. Die Sollpositionen des Stellschiebers 2 sind durch die Endlagen der Weichenzungen vorgegeben.

Zur zusätzlichen Führung sind Radlenker 83 sowie ein Herzstück 84 in der Weiche 8 eingerichtet. Diese verringern ein Risiko, dass ein Fahrzeug auf der Weiche 8 entgleist. Dies gilt insbesondere auch, wenn die Weiche 8 durch ein Fahrzeug aufgefahren wird. Ein Auffahren erfolgt, wenn sich aus einer Fahrtrichtung ein Fahrzeug nähert, obwohl die Weiche 8 für die andere Fahrtrichtung gestellt ist. - Während eines Betriebs des Weichenantriebs 1 treten z. B. durch Stellbewegungen, das Überfahren von Fahrzeugen und das Auffahren der Weiche 8 Stöße auf, welche insbesondere über den Stellschieber 2 in den Weichenantrieb 1 eingeleitet werden. Insbesondere ein Stellmodul 10 (vgl. Fig. 2) für den Stellschieber 2 muss diese Stöße auffangen, wodurch die für eine Spindel-Nabe-Verbindung 130 (vgl. Fig. 3) einer Stellkraftkupplung 42 (vgl. Fig. 2), 100 (vgl. Fig. 3) einer Stelleinrichtung 40 des Stellschiebers 2 zum Einsatz kommende Lagerung belastet wird.

Die Fig. 2 zeigt einen beispielhaften Weichenantrieb 1 mit einer aus dem Stellmodul 10 und einem Antriebsmodul 20 bestehenden Verstelleinrichtung 4 in einer ersten Endlage (Anschlag 65, vgl. unten), aus welcher der Weichenantrieb 1 in eine zweite Endlage (Anschlag 66) überführbar ist. Der Weichenantrieb 1 kann rechts oder links von einer Weiche 8 an einem Gleis positioniert sein und ist zum mechanischen Anschluss an hin- und herbewegbare Weichenteile, wie z. B. an Weichenzungen oder auch an ein betätigbares Herzstück 84, geeignet. Im Folgenden sei angenommen, dass der Weichenantrieb 1 mit seinem Stellschieber 2 an zwei Weichenzungen einer Weiche 8 mechanisch angeschlossen ist (vgl. Fig. 1).

Ein z. B. als ein Drehstrommotor 22 ausgebildeter Antriebsmotor 22 des Antriebsmoduls 20 rotiert über eine Getriebestufe 30, z. B. mit einem Ritzel, einem Zwischenrad und einem Großrad, oder einem Kettenantrieb (beides in Fig. 2 nicht dargestellt), eine Stellkraftkupplung 42. Eine Spindel-Nabe-Verbindung (nicht dargestellt) der Stellkraftkupplung 42 ist mit einer Gewindespindel 52 ausgebildet und weist eine auf der Gewindespindel 52 drehfest sitzende Kupplungsnabe der Stellkraftkupplung 42 auf. Die Stellkraftkupplung 42 wirkt auf einen Auffahrmechanismus 62, auch als Festhaltekupplungseinrichtung 62 bezeichenbar, des Stellmoduls 10. Der Auffahrmechanismus 62 umfasst ein Kupplungsgehäuse 63 und eine einstellbare Festhaltekupplung 64.

Beim Anlaufen des Antriebsmotors 22 rotiert die Kupplungsnabe und bewegt eine auf der Gewindespindel 52 drehsicher längsgeführte Verstellvorrichtung 44 der Stelleinrichtung 40 aus der dargestellten ersten Endlage, bei der die Verstellvorrichtung 44 an einem (ersten) Anschlag 65 des Stellmoduls 10 ansitzt, über einen Stellweg in einer Stellrichtung auf der Gewindespindel 52, bis sie an einem (zweiten) Anschlag 66 des Stellmoduls 10 ansitzt (also nach links in der Fig. 2). Hierfür ist zwischen der Stelleinrichtung 40 und der Gewindespindel 52 ein Kugelgewindetrieb eingerichtet, welcher die Rotationsbewegung der Gewindespindel 52 in eine lineare Stellbewegung der Stelleinrichtung 40 wandelt bzw. übersetzt. Das Kupplungsgehäuse 63 ist baulich vereinigt mit der einstellbaren Festhaltekupplung 64 des Auffahrmechanismus 62.

Bis zu einem Anschlagen der Verstellvorrichtung 44 am zweiten Anschlag 66 wird das Kupplungsgehäuse 63 aus der dargestellten ersten Endlage nach links in Stellrichtung mitgenommen und bewegt dabei über die Festhaltekupplung 64 den Stellschieber 2 aus der dargestellten ersten Endlage, in der sich der Stellschieber 2 weitgehend in einem Antriebsgehäuse 12 des Weichenantriebs 1 befindet, in eine zweite Endlage, in welcher der Stellschieber 2 am weitesten aus dem Antriebsgehäuse 12 ausgefahren ist. Hier nicht dargestellt ist ein Au-ßenverschluss des Stellschiebers 2, mit welchem der Stellschieber 2 an die in den Stellrichtungen hin und herbewegbaren Weichenzungen mechanisch anschließbar ist.

Beim Rücklauf des Weichenantriebs 1 bzw. des Stellschiebers 2 aus der zweiten Antriebslage (Verstellvorrichtung 44 sitzt am zweiten Anschlag 66 an) in die in der Fig. 2 gezeigte erste Antriebslage (Verstellvorrichtung 44 sitzt am ersten Anschlag 65 an) durchläuft die Stellkraftkupplung 42 den Stellweg zwischen den Anschlägen 66, 65 des Stellmoduls 10 in umgekehrter Richtung. Die Verstellvorrichtung 44 nimmt dabei bis zum ersten Anschlag 65 den Stellschieber 2 über das Kupplungsgehäuse 63 und die Festhaltekupplung 64 mit.

Die Festhaltekupplung 64 ist dazu ausgelegt, den Weichenantrieb 1 insbesondere bei einem Auffahren der Weiche 8 vor Beschädigungen zu schützen. Die Festhaltekupplung 64 spricht dann an und gibt den Stellschieber 2 frei, wenn die Weiche 8 aufgefahren wird und dabei hohe Kräfte von außen her in den Weichenantrieb 1 hineingetragen werden. Allerdings kann die Festhaltekupplung 64 nicht verhindern, dass auf die Lagerung (in Fig. 2 nicht dargestellt) der Stellkraftkupplung 42 Stöße übertragen werden.

Der Stellschieber 2 ist im Weichenantrieb 1 in seinen beiden Endlagen bevorzugt kraft- und formschlüssig festlegbar. Hierzu dienen ein erster Sperrschieber 72 und ein zweiter Sperrschieber 74 einer Sperrvorrichtung 70, wobei der erste Sperrschieber 72 für die erste Endlage in eine entsprechende erste Ausnehmung (nicht dargestellt) des Stellschiebers 2 einfallen kann, und der zweite Sperrschieber 74 für die zweite Endlage in eine entsprechende zweite Ausnehmung des Stellschiebers 2 einfallen kann (nicht dargestellt). Dies geschieht z. B. mittels Federvorrichtungen. - Beim Erreichen einer Endlage können wiederum Stöße auftreten, welche durch den Stellschieber 2 in die Lagerung der Stellkraftkupplung 42 eingeleitet werden und diese mechanisch belasten.

Bei einem Auffahren der durch den Weichenantrieb 1 gesteuerten Weiche 8 (nur möglich bei der Steuerung von Weichenzungen, nicht möglich bei der Steuerung eines Herzstückes) werden nach dem Lösen eines Weichenverschlusses von der Weichenseite her über den Stellschieber 2 erhebliche Kräfte in den Weichenantrieb 1 eingeleitet. Sobald dabei die Festhaltekraft der Festhaltekupplung 64 überschritten wird, setzt sich der Stellschieber 2 unter der Einwirkung der von außen auf ihn einwirkenden Kraft in die eine oder andere Richtung in Bewegung, in der vorliegenden Darstellung der Fig. 2 nach links. Dabei wird ein Federelement der Festhaltekupplung 64 mechanisch vom Stellschieber 2 entkoppelt.

Die Fig. 3 zeigt eine Stellkraftkupplung 100 für einen Weichenantrieb 1, z. B. den in der Fig. 2 dargestellten oder einen anderen. Die Stellkraftkupplung 100 weist ein einteiliges, einstückiges oder integrales Kupplungsgehäuse 110 mit z. B. einem darauf montiertem Antriebsrad 112 auf, welches an zwei einander gegenüberliegenden Stirnseiten mit jeweils einem Einstellglied 127, welche in der vorliegenden Ausführungsform vorzugsweise als Einstellmuttern 127 ausgebildet sind, verschlossen ist. Die Einstellglieder 127 weisen eine Durchgangsöffnung auf, durch welche eine Gewindespindel 134 (in der Fig. 3 nicht dargestellt) hindurch durchführbar (Fig. 3 links) bzw. hineinerstreckbar (Fig. 3 rechts) ist.

Die Gewindespindel 134 ist im Bereich des Kupplungsgehäuses 110 von einer Kupplungsnabe 132 als einen Antrieb der Gewindespindel 134 umschließbar, wobei sich an deren äußerer Umfangsfläche ein jedes Einstellglied 127 durch ein Lager, vorliegend als ein Gleitlager ausgebildet, abstützt bzw. vice versa. Ein anderes Lager ist natürlich anwendbar. Die Kupplungsnabe 132 lässt sich auf diese Weise im Kupplungsgehäuse 110 verdrehen. Die Gewindespindel 134 und die Kupplungsnabe 132 bilden dabei eine drehfeste Spindel-Nabe-Verbindung 130, z. B. mittels einer Passfeder.

Zwischen der Kupplungsnabe 132 und einer Innenseite des Kupplungsgehäuses 110 ist eine Überlastkupplung 120 ausgebildet. In der vorliegenden Ausführungsform ist die Überlastkupplung 120 eine Lamellenkupplung mit Außenlamellen 113 des Kupplungsgehäuses 110 und Innenlamellen 133 der Kupplungsnabe 132. Hierbei sind die Außenlamellen 113 und die Innenlamellen 133 als Reiblamellen 113, 133 (Lamellenpaket 113, 133) ausgebildet, wobei die Außenlamellen 113 axial Ax verschieblich und drehfest innen im Kupplungsgehäuse 110 und die Innenlamellen 133 axial Ax verschieblich und drehfest außen auf Kupplungsnabe 131 vorgesehen sind.

Das Lamellenpaket 113, 133 der Überlastkupplung 120 ist durch zwei Druckstücke 123 der Überlastkupplung 120 begrenzt, die in der vorliegenden Ausführungsform als Druckringe ausgebildet sind. Zwischen jedem Einstellglied 127 und einem betreffenden Druckstück 123 ist eine Vorspanneinrichtung 125 angeordnet, welche in Abhängigkeit von jedem Einstellglied 127 Vorspannkräfte auf die Druckstücke 123 ausübt. Die Vorspanneinrichtung 125 ist in der vorliegenden Ausführungsform vorzugsweise eine Federeinrichtung 125, insbesondere eine Tellerfederanordnung 125. Andere Federn oder Federeinrichtungen sind natürlich anwendbar.

Durch ein Verdrehen eines oder beider Einstellglieder 127 kann eine Vorspannkraft und somit auch eine Auslösekraft der Überlastkupplung 120 eingestellt werden. In einem bevorzugten Ausführungsbeispiel werden beide Einstellglieder 127 um einen gleichen Betrag verdreht, sodass gleiche Vorspannkräfte auftreten. Mit einer ungleichen Einstellung können Richtungsabhängigkeiten ausgeglichen werden. - Ferner stützt sich die Kupplungsnabe 132 über zwei Kombinationsrollenlager 140 in dem jeweiligen Druckstück 123 ab, wobei die eigentliche Überlastkupplung 120 zwischen den Kombinationsrollenlagern 140 in der Stellkraftkupplung 100 eingerichtet ist.

Die Kombinationsrollenlager 140 sind folgendermaßen aufgebaut. Sie haben als radialen Lagerteil im verstärkten Außenring einen Nadelkäfig oder einen vollnadeligen Nadelkranz als radial lagernde Rollengruppe 148. Die Stirnseiten des verstärkten Außenringes dienen als Laufbahnen für die axial lagernden Rollengruppe, die hier in zwei Rollengruppen beidseitig des Außenringes 143 aufgeteilt sind. Z. B. kommen hier zwei Nadelkäfige oder zwei Zylinderkäfige zum Einsatz (die Käfige selbst der Nadelkäfige/Zylinderkäfige sind in Figur drei nicht dargestellt). Ein Innenring 142 - zwischen seitlichen Laufscheiben 144, 145 der Axiallager eingeschlossen - dient als Innenlaufbahn des radialen Lagerteils, gleichzeitig auch als Anschlag für die axial beidseitig angrenzenden Laufscheiben 144, 145, die das Lager axial nach außen begrenzen und nach innen die Laufbahnen für die beiden axial lagernden Rollengruppen 147 bilden. Weiterhin angedeutet sind Dichtungen 146, mit denen ein Schmiermittel (nicht dargestellt) innerhalb eines durch den Außenring 143, den Innenring 142 und die Laufscheiben 144, 145 gebildeten und die Wälzkörper (bestehend aus den radial lagernden Rollengruppen 148 und den axial lagernden Rollengruppen 147) aufnehmenden Innenraums eingeschlossen wird.

Die oben genannten Bauteile 142 ... 148 bilden gemeinsam die Funktionseinheit des Kombinationsrollenlagers 114. Sie können eine für sich unabhängige und gemeinsam montierbare Baueinheit bilden oder bei der Montage auf der Kupplungsnabe als jeweilige Einzelteile montiert werden. Nach der Montage stützt sich diese Baueinheit, also das Kombinationsrollenlager 140, auf der Kupplungsnabe 132 an zwei durch die Laufscheiben 144, 145 gebildeten, axial gegenüberliegenden äußeren Ecken ab. Und in den Druckstücken 123 stützt sich diese Baueinheit mit jeweils einer Ecke des Außenrings 143 ab, derart, dass die sich abstützenden Ecken des Außenrings der jeweiligen Kombinationsrollenlager 140 einander zugewandt sind.

Nach Montage des Kombinationsrollenlagers 140 auf der Kupplungsnabe 132 wird dieses mit Hilfe einer Spannmutter 149 am Montagehort gehalten und vorzugsweise vorgespannt. Dabei wird die Spannmutter 149 auf ein in Figur 3 angedeutetes Gewinde auf der Kupplungsnabe 132 aufgeschraubt und kann zur Sicherung mit einer nicht dargestellten weiteren Mutter gesichert werden.

### Bezugszeichenliste

- 1: Weichenantrieb

- 2: Stellschieber
- 4: Verstelleinrichtung
- 10: Stellmodul
- 20: Antriebsmodul
- 22: Antriebsmotor
- 30: Getriebestufe
- 40: Stelleinrichtung
- 42: Stellkraftkupplung
- 44: Verstellvorrichtung
- 52: Gewindespindel
- 62: Auffahrmechanismus
- 63: Kupplungsgehäuse
- 64: Festhaltekupplung
- 65: (erster) Anschlag
- 66: (zweiter) Anschlag
- 70: Sperreinrichtung
- 72: (erster) Sperrschieber
- 74: (zweiter) Sperrschieber

- 100: Stellkraftkupplung
- 110: Kupplungsgehäuse
- 112: Antriebsrad
- 113: (Außen-)Lamelle
- 120: Überlastkupplung
- 123: Druckstück
- 125: Vorspanneinrichtung
- 127: Einstellglied
- 130: Spindel-Nabe-Verbindung
- 132: Kupplungsnabe
- 133: (Innen-)Lamelle
- 134: Gewindespindel
- 140: Kombinationsrollenlager
- 142: Kombinationsrollenlager-Innenring oder Innenring
- 143: Kombinationsrollenlager-Außenring oder Außenring
- 144: Kombinationsrollenlager-Laufscheibe oder Laufscheibe
- 145: Kombinationsrollenlager-Laufscheibe oder Laufscheibe
- 146: Dichtung
- 147: axial lagernde Rollengruppe
- 148: radial lagernde Rollengruppe
- 149: Spannmutter

- Ax: Axialrichtung der Stellkraftkupplung 100, des Kreuzrollenlagers 140 etc.
- Ra: Radialrichtung der Stellkraftkupplung 100, des Kreuzrollenlagers 140 etc.
- Um: Umfangsrichtung der Stellkraftkupplung 100, des Kreuzrollenlagers 140 etc.

- 8: (Bahn-)Weiche
- 81: erster Fahrweg
- 82: zweiter Fahrweg
- 83: Radlenker
- 84: Herzstück

## Patentansprüche

1. Stellkraftkupplung (100), insbesondere für einen elektromechanischen Weichenantrieb (1) im Bahnverkehr, mit
einer um eine Axialrichtung (Ax) der Stellkraftkupplung (100) herum rotierbar antreibbaren Kupplungsnabe (132), in welcher eine Gewindespindel (134) montierbar ist, wobei die Kupplungsnabe (132) über eine Überlastkupplung (120) mit einem rotierbaren Kupplungsgehäuse (110) der Stellkraftkupplung (100) mechanisch gekoppelt ist, **dadurch gekennzeichnet, dass**
das Kupplungsgehäuse (110) mittels zweier koaxialer Kombinationsrollenlager (140), aufweisend jeweils eine Kombination von zwei axial lagernden Rollengruppen (147) und einer radial lagernden Rollengruppe (148), auf der Kupplungsnabe (132) drehbar gelagert ist.

2. Stellkraftkupplung (100) gemäß vorhergehendem Anspruch, **dadurch gekennzeichnet, dass** das jeweilige Kombinationsrollenlager (140) selbst als:
• eine einteilig zusammengehaltene Baugruppe (140) und/oder
• ein im Wesentlichen formschlüssiger Montageverbund (140), und/oder
• ein spielarmes oder ein mechanisch vorgespanntes Kombinationsrollenlager (140)
ausgebildet ist.

3. Stellkraftkupplung (100) gemäß einem der vorhergehenden Ansprüche, **dadurch gekennzeichnet, dass** die Stellkraftkupplung (100) derart ausgebildet ist, dass:
• in einem Stellbetrieb der Stellkraftkupplung (100) die Überlastkupplung (120) im Wesentlichen geschlossen bleibt,
• bei einem Begrenzen einer Stellkraft der Gewindespindel (134) durch die Stellkraftkupplung (100), die Überlastkupplung (120) gelöst ist, und/oder
• beim Begrenzen der Stellkraft die axial (Ax) gegeneinander vorgespannten Lamellen (113, 133) der Überlastkupplung (120) aneinander vorbeigleiten.

4. Stellkraftkupplung (100) gemäß einem der vorhergehenden Ansprüche, **dadurch gekennzeichnet, dass** die Kupplungsnabe (132) radial (Ra) innerhalb der Überlastkupplung (120) eingerichtet ist, wobei:
• sich die Kupplungsnabe (132) über je eines der Kombinationsrollenlager (140) in jeweils einem Druckstück (123) der Überlastkupplung (120) abstützt,
• die zwei Druckstücke (123, 123) auf ein Lamellenpaket (113, 133; ...) der Überlastkupplung (120) axial (Ax) vorgespannt einwirken, und/oder
• das Lamellenpaket (113, 133; ...) der Überlastkupplung (120) axial (Ax) zwischen den Kombinationsrollenlagern (140) eingerichtet ist.

5. Stellkraftkupplung (100) gemäß einem der vorhergehenden Ansprüche, **dadurch gekennzeichnet, dass**:
• das Kombinationsrollenlager (140) an lediglich zwei in Umfangsrichtung (Um) der Stellkraftkupplung (100) umlaufenden Eckbereichen in der Stellkraftkupplung (100) festgelegt ist,
• in einem axial-radialen (Ax-Ra) Halbschnitt der Stellkraftkupplung (100) gesehen, das Kombinationsrollenlager (140) an einander diagonal gegenüberliegenden Eckbereichen festgelegt ist.

6. Stellkraftkupplung (100) gemäß einem der vorhergehenden Ansprüche, **dadurch gekennzeichnet, dass**:
• das Kombinationsrollenlager (140) an lediglich drei in Umfangsrichtung (Um) der Stellkraftkupplung (100) umlaufenden Eckbereichen in der Stellkraftkupplung (100) festgelegt ist,
• das Kombinationsrollenlager (140) radial (Ra) außen axial (Ax) einseitig oder axial (Ax) beidseitig, und radial (Ra) innen axial (Ax) beidseitig oder axial (Ax) einseitig in der Stellkraftkupplung (100) festgelegt ist.

7. Stellkraftkupplung (100) gemäß einem der vorhergehenden Ansprüche, **dadurch gekennzeichnet, dass**:
• ein Kombinationsrollenlager-Außenring (143) des Kombinationsrollenlagers (140) innen in einem Druckstück (123) der Überlastkupplung (120) eingerichtet ist,
• der Kombinationsrollenlager-Außenring (143) axial (Ax) beidseitig oder axial (Ax) einseitig im Druckstück (123) festgelegt ist, und/oder
• sich der Kombinationsrollenlager-Außenring (143) radial (Ra) teilflächig oder vollflächig innen im Druckstück (123) abstützt.

8. Stellkraftkupplung (100) gemäß einem der vorhergehenden Ansprüche, **dadurch gekennzeichnet, dass**:
• ein Kombinationsrollenlager-Innenring (142) und axial beidseitig des Kombinationsrollenlager-Innenrings und direkt an dieses angrenzend je eine Kombinationsrollenlager-Laufscheibe (144, 145) des Kombinationsrollenlagers (140) außen auf der Kupplungsnabe (132) eingerichtet ist,
• der Kombinationsrollenlager-Innenring (142) zusammen mit den Kombinationsrollenlager-Laufscheiben (144, 145) axial (Ax) einseitig oder axial (Ax) beidseitig auf der Kupplungsnabe (132), festgelegt ist, und/oder
• sich der Kombinationsrollenlager-Innenring (142) zusammen mit den Kombinationsrollenlager-Laufscheiben (144, 145) radial (Ra) teilflächig oder vollflächig auf der Kupplungsnabe (132) abstützt.

9. Stellkraftkupplung (100) gemäß einem der vorhergehenden Ansprüche, **dadurch gekennzeichnet, dass**:
• der Kombinationsrollenlager-Innenring (142) zusammen mit den Kombinationsrollenlager-Laufscheiben (144, 145) mit einer Spannmutter (149) axial (Ax) einseitig oder axial (Ax) beidseitig auf der Kupplungsnabe (132) festgelegt ist.

10. Stellkraftkupplung (100) gemäß einem der vorhergehenden Ansprüche, **dadurch gekennzeichnet, dass**:
• die zwei Druckstücke (123, 123) axial (Ax) außen jeweils von einer Vorspanneinrichtung (125, 125) gegeneinander axial (Ax) vorgespannt in der Stellkraftkupplung (100) eingerichtet sind,
• eine mechanische Vorspannung der jeweiligen Vorspanneinrichtung (125, 125) von einem jeweils axial (Ax) außen an der Vorspanneinrichtung (125, 125) eingerichteten Einstellglied (127, 127) einstellbar und aufrechterhalten ist, und/oder
• das jeweilige Einstellglied (127) innen im Kupplungsgehäuse (110) eingerichtet ist, wobei das Einstellglied (127) bevorzugt mittels einer Einstellverschraubung in Axialrichtung (Ax) verstellbar im Kupplungsgehäuse (110) eingerichtet ist.

11. Elektromechanische Stelleinrichtung (4) für einen Weichenantrieb (1) im Bahnverkehr, **dadurch gekennzeichnet, dass** die Stelleinrichtung (4) einen Antriebsmotor (22) und eine Stellkraftkupplung (100) umfasst, wobei die Stellkraftkupplung (100) gemäß einem der vorhergehenden Ansprüche ausgebildet ist.

12. Weichenantrieb (1) für den Bahnverkehr, **dadurch gekennzeichnet, dass** der Weichenantrieb (1) eine Stelleinrichtung (4) und/oder eine Stellkraftkupplung (100) umfasst, wobei die Stelleinrichtung (4) und/oder die Stellkraftkupplung (100) gemäß einem der vorhergehenden Ansprüche ausgebildet ist.

## Claims

1. Actuating force coupling (100), in particular for an electromechanical point machine (1) in railway traffic, having
a coupling hub (132) which can be driven in a rotatable manner about an axial direction (Ax) of the actuating force coupling (100), in which coupling hub (132) a threaded spindle (134) can be mounted, wherein the coupling hub (132) is mechanically coupled by way of an overload coupling (120) to a rotatable coupling housing (110) of the actuating force coupling (100), **characterised in that**
the coupling housing (110) is mounted in a rotatable manner on the coupling hub (132) by means of two coaxial combination roller bearings (140) having a combination of two axially mounted roller groups (147) and one radially mounted roller group (148) in each case.

2. Actuating force coupling (100) according to the preceding claim, **characterised in that** the respective combination roller bearing (140) is itself embodied as:
• a module (140) held together in one piece and/or
• a substantially form-fit assembly interlocking (140), and/or
• a low-backlash or mechanically pretensioned combination roller bearing (140).

3. Actuating force coupling (100) according to one of the preceding claims, **characterised in that** the actuating force coupling (100) is embodied such that:
• the overload coupling (120) remains substantially closed in an actuating operation of the actuating force coupling (100),
• if an actuating force of the threaded spindle (134) is limited by the actuating force coupling (100), the overload coupling (120) is released, and/or
• if the actuating force is limited, the plates (113, 133) of the overload coupling (120) which are pretensioned axially (Ax) against one another slide past one another.

4. Actuating force coupling (100) according to one of the preceding claims, **characterised in that** the coupling hub (132) is set up radially (Ra) within the overload coupling (120), wherein:
• the coupling hub (132) is supported by way of one of the combination roller bearings (140) in a pressure piece (123) of the overload coupling (120) in each case,
• the two pressure pieces (123, 123) act in an axially (Ax) pretensioned manner on a plate stack (113, 133; ...) of the overload coupling (120) and/or
• the plate stack (113, 133; ...) of the overload coupling (120) is set up axially (Ax) between the combination roller bearings (140).

5. Actuating force coupling (100) according to one of the preceding claims, **characterised in that**
• the combination roller bearing (140) is fixed to only two corner regions in the actuating force coupling (100) extending in the peripheral direction (Um) of the actuating force coupling (100),
• viewed in an axial-radial (Ax-Ra) half-section of the actuating force coupling (100), the combination roller bearing (140) is fixed to corner regions which face one another diagonally.

6. Actuating force coupling (100) according to one of the preceding claims, **characterised in that**
• the combination roller bearing (140) is fixed to only three corner regions in the actuating force coupling (100) extending in the peripheral direction (Um) of the actuating force coupling (100),
• the combination roller bearing (140) is fixed radially (Ra) externally axially (Ax) on one side or axially (Ax) on both sides and radially (Ra) internally axially (Ax) on both sides or axially (Ax) on one side in the actuating force coupling (100).

7. Actuating force coupling (100) according to one of the preceding claims, **characterised in that**
• a combination roller bearing outer ring (143) of the combination roller bearing (140) is set up internally in a pressure piece (123) of the overload coupling (120),
• the combination roller bearing outer ring (143) is fixed axially (Ax) on both sides or axially (Ax) on one side in the pressure piece (123), and/or
• the combination roller bearing outer ring (143) is supported radially (Ra) over a partial surface or entire surface internally in the pressure piece (123).

8. Actuating force coupling (100) according to one of the preceding claims, **characterised in that**
• a combination roller bearing inner ring (142) and a combination roller bearing disc (144, 145) of the combination roller bearing (140) directly adjoining hereto axially on both sides of the combination roller bearing inner ring is set up externally on the coupling hub (132),
• the combination roller bearing inner ring (142) together with the combination roller bearing discs (144, 145) is fixed axially (Ax) on one side or axially (Ax) on both sides to the coupling hub (132), and/or
• the combination roller bearing inner ring (142) together with the combination roller bearing discs (144, 145) is supported radially (Ra) over a partial surface or entire surface on the coupling hub (132).

9. Actuating force coupling (100) according to one of the preceding claims, **characterised in that**:
• the combination roller bearing inner ring (142) together with the combination roller bearing discs (144, 145) is fixed with a clamping nut (149) axially (Ax) on one side or axially (Ax) on both sides to the coupling hub (132).

10. Actuating force coupling (100) according to one of the preceding claims, **characterised in that**:
• the two pressure pieces (123, 123) are set up axially (Ax) externally pretensioned axially (Ax) against one another in each case by a pretensioning facility (125, 125) in the actuating force coupling (100),
• a mechanical pretensioning of the respective pretensioning facility (125, 125) can be adjusted and is maintained by an adjustment element (127, 127) set up in each case axially (Ax) externally on the pretensioning facility (125, 125), and/or
• the respective adjustment element (127) is set up internally in the coupling housing (110), wherein the adjustment element (127) is preferably set up to be adjustable in the axial direction (Ax) in the coupling housing (110) by means of an adjustment screw joint.

11. Electromechanical actuating facility (4) for a point machine (1) in railway traffic, **characterised in that** the actuating facility (4) comprises a drive motor (22) and an actuating force coupling (100), wherein the actuating force coupling (100) is embodied according to one of the preceding claims.

12. Point machine (1) for railway traffic, **characterised in that** the point machine (1) comprises an actuating facility (4) and/or an actuating force coupling (100), wherein the actuating facility (4) and/or the actuating force coupling (100) is embodied according to one of the preceding claims.

## Revendications

1. Embrayage (100) à force de réglage, en particulier pour un mécanisme (1) électromécanisme de commande d'aiguille de la circulation ferroviaire, comprenant
un moyeu (132) d'embrayage, qui peut être entraîné en rotation autour d'une direction (Ax) axiale de l'embrayage (100) à force de réglage, et dans lequel peut être monté une broche (134) filetée, dans lequel le moyeu (132) d'embrayage est, par un embrayage (120) de surcharge, accouplé mécaniquement à un carter (110) d'embrayage tournant de l'embrayage (100) à force de réglage, **caractérisé en ce que**
le carter (110) d'embrayage est monté tournant sur le moyeu (132) d'embrayage au moyen de deux paliers (140) à roulements coaxiaux de combinaison, comportant chacun une combinaison de deux groupes (147) de roulements portant axialement et d'un groupe (148) de roulements portant radialement.

2. Embrayage (100) à force de réglage suivant la revendication précédente, **caractérisé en ce que** le palier (140) à roulements de combinaison respectif est constitué soi-même sous la forme de :
• un module (140) maintenu ensemble en une pièce et/ou
• un composite (140) de montage sensiblement à complémentarité de forme, et/ou
• un palier (140) à roulements de combinaison sans jeu ou précontraint mécaniquement.

3. Embrayage (100) à force de réglage suivant l'une des revendications précédentes, **caractérisé en ce que** l'embrayage (100) à force de réglage est constitué de manière à ce que :
• dans un fonctionnement de réglage de l'accouplement (100) l'embrayage (120) de surcharge reste sensiblement fermé,
• par une limitation d'une force de réglage de la broche (134) filetée par l'embrayage (100) à force de réglage, l'embrayage (120) de surcharge est débrayé, et/ou
• lors de la limitation de la force de réglage, les lamelles (113, 133), précontraintes axialement (Ax) les unes par rapport aux autres de l'embrayage (120) de surcharge, glissent les unes devant les autres.

4. Embrayage (100) à force de réglage suivant l'une des revendications précédentes, **caractérisé en ce que** le moyeu (132) d'embrayage est inséré radialement (Ra) à l'intérieur de l'embrayage (120) de surcharge, dans lequel :
• le moyeu (132) d'embrayage s'appuie par respectivement l'un des paliers (140) à roulements de combinaison par respectivement une pièce (123) de poussée de l'embrayage (120) de surcharge,
• les deux pièces (123, 123) de poussée agissent de manière précontrainte axialement (Ax) sur un paquet (113, 133 ; ...) de lamelles de l'embrayage (120) de surcharge, et/ou
• le paquet (113, 133 ; ...) de lamelles de l'embrayage (120) de surcharge est disposé axialement (Ax) entre les paliers (140) à roulements de combinaison.

5. Embrayage (100) à force de réglage suivant l'une des revendications précédentes, **caractérisé en ce que** :
• le palier (140) à roulements de combinaison est fixé dans l'embrayage (100) à force de réglage en seulement deux parties de coins faisant le tour dans la direction (Um) du pourtour de l'embrayage (100) de surcharge,
• considéré dans une demi-coupe axiale-radiale (Ax-Ra) de l'embrayage (100) à force de réglage, le palier (140) à roulements de combinaison est fixé en des parties de coins opposés en diagonale.

6. Embrayage (100) à force de réglage suivant l'une des revendications précédentes, **caractérisé en ce que** :
• le palier (140) à roulements de combinaison est fixé dans l'embrayage (100) à force de réglage seulement en trois parties de coins faisant le tour dans la direction (Um) de pourtour de l'embrayage (100) à force de réglage,
• le palier (140) à roulements de combinaison est fixé dans l'embrayage (100) à force de réglage, d'un côté axialement (Ax) à l'extérieur radialement (Ra) ou des deux côtés axialement (Ax) ou des deux côtés axialement (Ax) à l'intérieur radialement (Ra) ou d'un côté axialement (Ax).

7. Embrayage (100) à force de réglage suivant l'une des revendications précédentes, **caractérisé en ce que** :
• une bague (143) extérieure de palier à roulements de combinaison du palier (140) à roulements de combinaison est disposée à l'intérieur dans une pièce (123) de poussée de l'embrayage (120) de surcharge,
• la bague (143) extérieure de palier à roulements de combinaison est fixée des deux côtés axialement (Ax) ou d'un côté axialement (Ax) dans la pièce (123) de poussée, et/ou
• la bague (143) extérieure de palier à roulements de combinaison s'appuie radialement (Ra) sur tout ou partie de la surface à l'intérieur dans la pièce (123) de poussée.

8. Embrayage (100) à force de réglage suivant l'une des revendications précédentes, **caractérisé en ce que** :
• une bague (142) intérieure de palier à roulements de combinaison et axialement des deux côtés de la bague intérieure de palier à roulements de combinaison et directement au voisinage de celle-ci, est disposé respectivement un disque (144, 145) de palier à roulements de combinaison du palier (140) à roulements de combinaison, est disposé à l'extérieur sur le moyeu (132) de l'embrayage,
• la bague (142) intérieure de palier à roulements de combinaison est fixée ensemble avec le disque (144, 145) de palier à roulements de combinaison, d'un côté axialement (Ax) ou des deux côtés axialement (Ax), sur le moyeu (132) de l'embrayage, et/ou
• la bague (142) intérieure de palier à roulements de combinaison s'appuie ensemble avec le disque (144, 145) du palier à roulements de combinaison radialement (Ra) sur une partie ou sur toute la surface sur le moyeu (132) de l'embrayage.

9. Embrayage (100) à force de réglage suivant l'une des revendications précédentes, **caractérisé en ce que** :
• la bague (142) intérieure de palier à roulements de combinaison, ensemble avec les disques (144, 145) de paliers à roulements de combinaison, est fixée par un écrou (149) de serrage d'un côté axialement (Ax) ou des deux côtés axialement (Ax) sur le moyeu (132) de l'embrayage.

10. Embrayage (100) à force de réglage suivant l'une des revendications précédentes, **caractérisé en ce que** :
• les deux pièces (123, 123) de poussée sont disposées dans l'embrayage (100) à force de réglage en étant précontraintes axialement (Ax) l'une par rapport à l'autre, à l'extérieur axialement (Ax) respectivement d'un dispositif (125, 125) de précontrainte,
• une précontrainte mécanique du dispositif (125, 125) respectif de précontrainte est réglable et peut être maintenu par un organe (127, 127) de réglage disposé respectivement à l'extérieur axialement (Ax) sur le dispositif (125, 125) de précontrainte, et/ou
• l'organe (127) respectif de réglage est disposé à l'intérieur dans le carter (110) d'embrayage, dans lequel l'organe (127) de réglage est disposé dans le carter (110) d'embrayage en étant réglable dans la direction (Ax) axiale, de préférence au moyen d'un vissage de réglage.

11. Dispositif (4) électromécanique de réglage d'un mécanisme (1) de commande d'aiguille de la circulation ferroviaire, **caractérisé en ce que** le dispositif (4) de réglage comprend un moteur (22) d'entraînement et un embrayage (100) à force de réglage, dans lequel l'embrayage (100) à force de réglage est constitué suivant l'une des revendications précédentes.

12. Mécanisme (1) de commande d'aiguille pour la circulation ferroviaire, **caractérisé en ce que** le mécanisme (1) de commande d'aiguille comprend un dispositif (4) de réglage et/ou un embrayage (100) à force de réglage, dans lequel le dispositif (4) de réglage et/ou l'embrayage (100) à force de réglage est constitué suivant l'une des revendications précédentes.
